# EUROPEAN PATENT SPECIFICATION

(11) **EP 1 389 519 B1**
(45) Date of publication and mention of the grant of the patent: **25.05.2011**
(21) Application number: 02425525.9
(22) Date of filing: 13.08.2002
(51) Int. Cl.: B29C 69/02, B29C 43/24, E04F 15/10, B29B 9/06

(54) **A process for producing a covering of an elastomer material and product thereof**
Verfahren zur Herstellung eines Fussbodenbelags aus Elastomeren und dadurch hergestellter Fussbodenbelag
Procédé de réalisation d'un revêtement de sol en élastomère et revêtement de sol ainsi obtenu

(43) Date of publication of application: 18.02.2004
(73) Proprietor: Mondo S.p.A., 12051 Alba Frazione Gallo (CN) (IT)
(72) Inventor: Stroppiana, Fernando, 12060 Grinzane Cavour (Cuneo) (IT)
(74) Representative: Bosotti, Luciano

(56) References cited:
- EP-A- 0 321 760
- EP-A- 0 385 053
- EP-A- 0 582 770
- EP-A- 0 755 764
- DE-C- 19 525 136
- DE-C- 19 649 708
- US-A- 4 396 566

## Description

The present invention relates to the production of coverings, for instance floorings made of elastomer material, such as rubber.

The present invention belongs in the line of solutions oriented towards providing coverings of the type described, preventing them from presenting characteristics of directionality, above all as regards the aesthetic appearance of the covering.

For example, the patent No. EP-A-0 968 804, in the name of the present applicant, describes a process for producing a covering comprising at least one layer made of a rubber-based material of a cohesive type. The process comprises the steps of forming a substantially continuous bed of the aforesaid fragmented material and the operation of subjecting the material of said bed to a process of compacting so as to form a sheet material as a result of the cohesion of the material. The aforesaid compacting operation is carried out substantially in the absence of stresses due to stretching exerted on the fragmented material. This result is obtained, for instance, by using an isostatic press or a pair of belt-type elements having branches that face one another to define a compacting chamber.

The patent No. EP-B-0 512 197 describes a process for producing - continuously - a flooring made of curable (i.e., vulcanizable) elastomeric material starting from shaped pieces of a number of colours produced and compressed one against the other by application of heat and pressure so as to form a homogeneous strip. The solution described in EP-B-0 512 197 envisages the use, for making the above-mentioned pieces consisting of a number of colours, of a short-screw extruder (with a ratio of screw length/screw diameter of from 4:1 to 10:1) loaded in a continuous way at an operating temperature of 60-100°C with two or more strips of vulcanizable elastomer material of different colour. The above process also envisages adjustment of the extrusion rate of the extruder in such a way as not to give rise to mixing of the colours of the strips that are fed through the extruder.

At output from the extruder, the elastomer material is fed through a drawplate provided with cylindrical holes, and the filiform material resulting from the drawing operation is cut so as to give rise to pieces having a length of 1-2 mm. These pieces are then dropped directly into the gap of a two-roll calender, the rollers of which have a diameter/length ratio that is precisely determined (1:3.5) and are heated to a surface temperature of between 60°C and 100°C. The material deriving from the calendering operation is then fed to a continuously-operating vulcanization plant so as to obtain a final curing at a temperature of from 160°C to 180°C.

A basically similar solution is described in EP-A-0 740 154, where, however, the pieces of material deriving from the extrusion and cutting operations prior to being fed into the calender are made to advance on a conveyor for cooling to room temperature, the said conveyor having a length of 4 to 6 metres.

Another solution is described in US-A-4 396 566, where the granular material prior to being fed into the horizontal calender is filed up on at belt end preheated.

A drawback of the solutions described in the latter three documents referred to above, which are based on an intrinsically continuous process, is represented by the difficulty of ensuring that the overall colour of the covering will remain constant throughout the fabrication process and will not be subject to colour change. The phenomenon of colour change is a highly negative one when successive portions of the same lot of covering have to be laid one alongside another, with the risk that they will have colours that are even quite different from one another.

The purpose of the present invention is to provide a solution capable of overcoming the said drawback. According to the present invention, this purpose is achieved thanks to a process according to the features of apended claim 1. Preferred embodiments are disclosed in the subclaims.

The solution according to the invention is based, in general terms, upon the same operations (extrusion, drawing, shredding, calendering, and vulcanization) implemented in some of the solutions according to the known art, to which reference has been made previously.

There are, however, some significant differences, the most important of which being represented by the fact that the process according to the invention does not present any absolute need for being carried out continuously.

The solution according to the invention envisages that the granular material obtained as a result of the operations of extrusion, drawing and cutting will undergo, prior to being fed into the calender for formation of the material in a strip or ribbon, an operation of mixing. In a preferred way, the said mixing operation is carried out on a sufficiently extensive batch of granular material, for instance, the batch of granular material that is to be used for producing an entire lot of covering strip, the aim being to ensure, precisely as a result of the mixing operations, that the mixed granular material, which constitutes the intermediate product of the process according to the invention and is to be fed into the calender, will present characteristics of complete chromatic homogeneity. This enables assurance of the absolute constancy of the chromatic characteristics of the end product, without any undesirable phenomena of colour change or variation.

Precisely for the above-mentioned reason, the first step of the process according to the invention, i.e., the treatment in the extruder of strips of different colour of vulcanizable elastomer material, such as rubber, does not impose any particular constraints, either as regards the characteristics of the extruder, which may be any commercially available extruder, with any length/diameter ratio, or as regards the extrusion rate at which the extruder itself is operated, or again as regards the working temperature, which, without any problem, can be lower than 60°C.

In particular, the solution according to the invention does not impose any constraint as regards the need to prevent, during treatment in the extruder, the possible mixing between the colours of strings or strips of different colour fed into the extruder. Indeed, in the solution according to the invention an at least partial mixing constitutes a far from undesirable phenomenon.

As far as the operation of drawing is concerned, the tests conducted by the present applicant lead to the conclusion that the use of a drawplate having holes of a shape other than the cylindrical one is to be preferred.

Preferably, the aforesaid holes will be crescent-shaped, with a maximum opening or span (i.e., transverse dimension) of typically between 1 mm and 5 mm, with a preferred value of 2.5 mm and a length in the region of 10-15 mm.

Of course, all the quantitative values indicated in the foregoing description and appearing in the ensuing claims are to be interpreted, taking into account the tolerances inherent in their execution and in their determination.

Preferably, the aforesaid crescent-shaped openings are arranged in pairs of openings facing one another with opposed concavity i.e., according to a general configuration ( ) the pairs of openings being distributed in a regular array on the development of the drawplate.

The filiform formations deriving from the passage of the material undergoing extrusion through the holes of the drawplate undergo cutting with a circular blade of a known type so as to form the bits of plastic material that are to be vulcanized, which generally present a marbled appearance and have a length (i.e., a thickness) of typically between 1 and 4 mm.

The particulate material thus obtained is collected and can then be loaded into containers, such as drums, bins or tanks, for example in view of (at least) temporary storage in a collection area or warehouse.

It is evident that, as a result of the collection and storage, the above-mentioned granular material, even though brought up to a certain temperature at the moment of cutting, in any case reaches normal room temperature.

Before and after storage (which is in any case optional) and prior to feeding of the material into the calender, which will be described in greater detail hereinafter, the aforesaid particulate material undergoes mixing.

The above result can be achieved using any mixer for granular material, such as for instance a mixer for granules of resin of the plough-mixer or paddle-wheel-mixer type. Mixers of this type are currently available on the market both in the vertical version and in the horizontal version.

As a result of the aforementioned mixing, the granular material assumes an essentially homogeneous appearance, the degree of homogeneity being of course the higher, the more extensive the mixing, this being true even though, in the course of the extrusion process, the characteristics of the vulcanized and extruded material may be changed as a result, for example, as a result of a variation in the colouring of the strips of material fed into the extruder, or else on account of the change in the dimensions of the strips themselves.

The mixed granular material (with or without it being stored), which makes up the intermediate product of the process according to the invention is fed into a calender with counter-rotating rollers.

In a particularly preferred way, feed of the material takes place by gravity through a dispensing device (of a known type) configured for dropping of the particulate material into the gap defined by the two rollers of the calender, which have a horizontal axis and turn in opposite directions, the aim being to impart on the granular material subjected to compression between the two rollers of the calender a general downward movement, which brings about the formation of a continuous strip of compressed vulcanizable material starting from the granular material.

Usually, the calendering treatment is carried out at a temperature just above room temperature (typically between 30°C and 40°C), hence with a supply of heat, and consequently an energy consumption, that is extremely contained.

The speed of rotation of the rollers of the calender and the rate of feed by dropping of the granular material onto the rollers are jointly regulated in such a way that there remains a constant level of granular material waiting to be compressed above the gap between the two rollers.

The tests conducted by the present applicant show that with a simple solution of this sort it is possible to obtain a material in the form of a strip that is substantially free from phenomena of directionality of appearance, which are, instead, characteristic of many products obtained by calendering.

The above advantages are achieved without imposing any particular constraint either on the dimensional characteristics of the equipment used (ratio between diameter/length of the extruder or of the rollers of the calender) or on the corresponding operating parameters (feed rate, temperature, etc.).

The material in the form of a strip that comes out of the calendering process can then be fed into a normal continuously operating vulcanization plant (for instance, of the type known by the commercial name Rotocure), in which the step of final vulcanization of the rubber material is carried out.

The resultant vulcanized material already normally presents at least as regards the visual appearance the characteristics of a finished product.

Of course, without prejudice to the principle of the invention, the details of implementation, construction and the embodiments may vary widely with respect to what is described and illustrated herein merely by way of example, without thereby departing from the scope of the present invention which is defined in the apended claims.

## Claims

1. A process for producing, starting from a vulcanizable elastomer material, a covering that has an appearance substantially free from phenomena of directionality, **characterized in that** it comprises the operations of:
- feeding an extruder with strips of vulcanizable elastomer material of different colour, subjecting said material to extrusion by causing it to pass through a drawplate provided with openings, wherein the drawplate has openings having a crescent-shaped conformation;
- subjecting the material obtained by means of drawing to shredding so as to obtain, as a result of the action of shredding, a granular material;
- subjecting said granular material to mixing until it is rendered substantially chromatically homogeneous;
- feeding said granular material rendered homogeneous by mixing to a calender, by direct feeding by gravity of the homogeneous granular material into the gap between the rollers of the calender so as to obtain, as a result of calendering, a strip of vulcanizable elastomer material; and
- subjecting said material in the form of a strip to vulcanization.

2. The process according to Claim 1, **characterized in that** it comprises the operation of subjecting to storage said granular material before or after said mixing.

3. The process according to Claim 1, **characterized in that** said openings have a maximum transverse dimension of between 1 mm and 5 mm.

4. The process according to Claim 1, **characterized in that** said openings have a maximum transverse dimension of 2.5 mm.

5. The process according to any one of Claims 1 to 4, **characterized in that** said openings have a length in the region of 10-15 mm.

6. The process according to any one of Claims 1 to 5, **characterized in that** said crescent-shaped openings are arranged in pairs of openings facing one another with the concavity set opposed, i.e., according to a general configuration ( ).

7. The process according to Claim 6, **characterized in that** said pairs of openings are distributed according to a regular array on the development of the drawplate.

8. The process according to any one of the preceding claims, **characterized in that** it comprises the operation of enabling said granular material to reach, before or after said mixing operation, room temperature.

9. The process according to any one of the preceding claims, **characterized in that** it comprises the operation of enabling an at least partial mixing of the colours of said strips of vulcanizable elastomer material fed to the extruder.

10. The process according to any one of the preceding claims, **characterized in that** the rollers of said calender are kept at a temperature of substantially between 30°C and 40°C.

11. The process according to any one of the preceding claims, **characterized in that** the speed of rotation of the rollers of the calender and the rate of feed by gravity of the granular material onto the rollers are regulated jointly so as to maintain a constant level of granular material waiting to be calendered.

## Patentansprüche

1. Verfahren zur Herstellung, ausgehend von einem vulkanisierbaren Elastomermaterial, eines Belages, der ein Erscheinungsbild aufweist, das im wesentlichen richtungslos ist, **dadurch gekennzeichnet, dass** es folgende Vorgänge umfasst:
- Befüllen eines Extruders mit Streifen eines vulkanisierbaren Elastomermaterials unterschiedlicher Farbe, wobei das Material einer Extrusion unterzogen wird, indem es eine Düsenplatte durchläuft, die mit Öffnungen versehen ist, wobei die Düsenplatte Öffnungen hat, die eine halbmondförmige Gestalt haben;
- Zerkleinern des durch die Extrusion gewonnenen Materials, um so infolge der Zerkleinerung ein körniges Material zu erhalten;
- Mischen des körnigen Materials, bis es farblich im wesentlichen homogen ist;
- Zuführen des körnigen Materials, das durch Mischen homogen ist, in einen Kalander durch direktes Zuführen des homogenen, körnigen Materials infolge von Schwerkraft in den Spalt zwischen den Walzen des Kalanders, um so infolge des Kalanderns einen Streifen eines vulkanisierbaren Elastomermaterials zu erhalten; und
- Vulkanisieren des streifenförmigen Materials.

2. Verfahren nach Anspruch 1, **dadurch gekennzeichnet, dass** es den Vorgang des Lagerns des körnigen Materials vor und nach dem Mischen umfasst.

3. Verfahren nach Anspruch 1, **dadurch gekennzeichnet, dass** die Öffnungen eine maximale Querabmessung zwischen 1 und 5 mm haben.

4. Verfahren nach Anspruch 1, **dadurch gekennzeichnet, dass** die Öffnungen eine maximale Querabmessung von 2,5 mm haben.

5. Verfahren nach einem der Ansprüche 1 bis 4, **dadurch gekennzeichnet, dass** die Öffnungen eine Länge im Bereich von 10 bis 15 mm haben.

6. Verfahren nach einem der Ansprüche 1 bis 5, **dadurch gekennzeichnet, dass** die halbmondförmigen Öffnungen in Paaren von Öffnungen angeordnet sind, die einander zugewandt sind, wobei die Konkavität entgegensetzt ist, d.h. gemäß einer allgemeinen Konfiguration ( ).

7. Verfahren nach Anspruch 6, **dadurch gekennzeichnet, dass** die Paare der Öffnungen gemäß einer regelmäßigen Anordnung auf der Ausdehnung der Düsenplatte verteilt sind.

8. Verfahren nach einem der vorhergehenden Ansprüche, **dadurch gekennzeichnet, dass** es den Vorgang umfasst, das körnige Material vor oder nach dem Mischvorgang Raumtemperatur erreichen zu lassen.

9. Verfahren nach einem der vorhergehenden Ansprüche, **dadurch gekennzeichnet, dass** es den Vorgang umfasst, wenigstens eine Teilmischung der Farben der Streifen des vulkanisierbaren Materials dem Extruder zuzuführen.

10. Verfahren nach einem der vorhergehenden Ansprüche, **dadurch gekennzeichnet, dass** die Walzen des Kalanders bei einer Temperatur im wesentlichen zwischen 30°C und 40°C gehalten werden.

11. Verfahren nach einem der vorhergehenden Ansprüche, **dadurch gekennzeichnet, dass** die Drehzahl der Walzen des Kalanders und die Zuführrate des körnigen Materials durch Schwerkraft auf die Walzen gemeinsam reguliert werden, um einen konstanten Pegel des körnigen Materials beizubehalten, das kalandert werden soll.

## Revendications

1. Procédé pour produire, à partir d'un matériau élastomère vulcanisable, un revêtement ayant un aspect pratiquement exempt de phénomène de directionnalité, **caractérisé en ce qu'**il comprend les opérations consistant à :
- alimenter une extrudeuse avec des bandes de matériau élastomère vulcanisable de différentes couleurs, soumettre ledit matériau à une extrusion en le forçant à passer à travers une filière d'étirage dotée d'ouvertures, la filière d'étirage ayant des ouvertures ayant une conformation en forme de croissant;
- soumettre le matériau obtenu au moyen de l'étirage à un déchiquetage de façon à obtenir, en résultat de l'action de déchiquetage, un matériau granulaire;
- soumettre ledit matériau granulaire à un mélange jusqu'à ce qu'il soit rendu pratiquement homogène chromatiquement;
- introduire ledit matériau granulaire rendu homogène par mélange dans une calandre, par introduction directe par gravité du matériau granulaire homogène dans l'espace entre les rouleaux de la calandre de façon à obtenir, en résultat du calandrage, une bande de matériau élastomère vulcanisable ; et
- soumettre ledit matériau sous la forme d'une bande à une vulcanisation.

2. Procédé selon la revendication 1, **caractérisé en ce qu'**il comprend l'opération consistant à soumettre à un stockage ledit matériau granulaire avant ou après ledit mélange.

3. Procédé selon la revendication 1, **caractérisé en ce que** lesdites ouvertures ont une dimension transversale maximale comprise entre 1 mm et 5 mm.

4. Procédé selon la revendication 1, **caractérisé en ce que** lesdites ouvertures ont une dimension transversale maximale de 2,5 mm.

5. Procédé selon l'une quelconque des revendications 1 à 4, **caractérisé en ce que** lesdites ouvertures ont une longueur dans la région de 10 à 15 mm.

6. Procédé selon l'une quelconque des revendications 1 à 5, **caractérisé en ce que** lesdites ouvertures en forme de croissant sont agencées en paires d'ouvertures se faisant mutuellement face avec la concavité disposée en opposition, c'est-à-dire selon une configuration générale en ( ).

7. Procédé selon la revendication 6, **caractérisé en ce que** lesdites paires d'ouvertures sont distribuées selon un réseau régulier sur le développement de la filière d'étirage.

8. Procédé selon l'une quelconque des revendications précédentes, **caractérisé en ce qu'**il comprend l'opération consistant à permettre audit matériau granulaire d'atteindre, avant ou après ladite opération de mélange, la température ambiante.

9. Procédé selon l'une quelconque des revendications précédentes, **caractérisé en ce qu'**il comprend l'opération consistant à permettre un mélange au moins partiel des couleurs desdites bandes de matériau élastomère vulcanisable introduites dans l'extrudeuse.

10. Procédé selon l'une quelconque des revendications précédentes, **caractérisé en ce que** les rouleaux de ladite calandre sont maintenus à une température sensiblement comprise entre 30°C et 40°C.

11. Procédé selon l'une quelconque des revendications précédentes, **caractérisé en ce que** la vitesse de rotation des rouleaux de la calandre et le débit d'introduction par gravité du matériau granulaire sur les rouleaux sont régulés conjointement de façon à maintenir un niveau constant de matériau granulaire en attente de calandrage.
